# EUROPEAN PATENT APPLICATION

(11) **EP 2 772 844 A1**
(43) Date of publication of application: **03.09.2014**
(21) Application number: 13776707.5
(22) Date of filing: 11.04.2013
(51) Int. Cl.: G06F 3/0488

(54) **TERMINAL DEVICE AND METHOD FOR QUICKLY STARTING PROGRAM**

(30) Priority: 28.08.2012 CN 201210310310
(71) Applicant: Huawei Technologies Co., Ltd., Shenzhen, Guangdong 518129 (CN)
(72) Inventor: LU, Huabing, Shenzhen, Guangdong 518129 (CN); HE, Fei, Shenzhen, Guangdong 518129 (CN); XIA, Lin, Shenzhen, Guangdong 518129 (CN)
(74) Representative: Goddar, Heinz J.
(86) International application number: PCT/CN2013/074078
(87) International publication number: WO 2014/032431

(57) **Abstract**

Embodiments of the present invention provide a terminal device and a method for quickly starting a program. The terminal device in the embodiments of the present invention includes a device body, where a front touch-sensitive display is located on a front surface of the device body, and an auxiliary touch device is located on a back surface or a side surface of the device body. The device body supports a controller and a memory. The controller is configured to: drive the auxiliary touch device, generate a corresponding touch signal according to a touch action of a user that is received by the auxiliary touch device, determine a user event according to the touch signal, run a corresponding executable program according to mapping between the user event and the executable program in the memory, and display the program on the front touch-sensitive display. The memory is configured to store the mapping between the user event and the executable program. The technical solutions of the present invention can implement quick start of the executable program corresponding to the touch action of the user. The operation steps are simple and practical, and the operation efficiency of a user on the terminal device is improved.

## Description

### TECHNICAL FIELD

The present invention relates to information processing technologies in the communications field, and in particular, to a terminal device and a method for quickly starting a program.

### BACKGROUND

With development of technologies, more and more terminal devices have been phased into people's daily lives, such as mobile phones and tablet computers. Currently, main input devices of the terminal devices include a keyboard, a touch device, a sensor, a mouse, and the like. Touch devices have become one of the most important input devices. When people need to start a terminal device, for example, a program on a mobile phone, people usually need to unlock the device first, for example, by sliding to unlock, and then click an icon to enter the program to corresponding to the icon.

In the process of implementing the embodiments of the present invention, the inventor finds that the start of an application on a terminal device in the prior art involves cumbersome operation steps. Especially, the start of applications that need to be started instantly, such as a photographing function, may suffer the problem of miss of an opportune moment.

### SUMMARY

Embodiments of the present invention provide a terminal device and a method for implementing quick start of a program thereof to start a preset program quickly.

A first aspect of the embodiments of the present invention provides a terminal device, which includes a device body, where a front touch-sensitive display is located on a front surface of the device body, and an auxiliary touch device is located on a back surface or a side surface of the device body; and
the device body supports a controller and a memory, where
the controller is configured to: drive the auxiliary touch device, generate a corresponding touch signal according to a touch action of a user that is received by the auxiliary touch device, determine a user event according to the touch signal, run a corresponding executable program according to mapping between the user event and the executable program in the memory, and display the program on the front touch-sensitive display; and
the memory is configured to store the mapping between the user event and the executable program.

In a first possible implementation manner of the first aspect of the embodiments of the present invention, the controller includes:
a driver, configured to: drive the auxiliary touch device, generate a corresponding touch signal according to each touch action of the user that is received by the auxiliary touch device, and send the signals to a processor successively, where different touch actions correspond to different types of touch signals; and the processor, configured to: receive the touch signal sent by the driver, determine a user event according to the type and number of received touch signals, run a corresponding executable program according to mapping between the user event and the executable program in the memory, and display the program on the front touch-sensitive display.

Further, in another possible implementation manner, the processor specifically includes:
a first processing unit, configured to: when the terminal device is locked, determine, after receiving three touch signals corresponding to touch actions continuously from the driver within a preset time period, when the terminal device is locked; and
a second processing unit, configured to: run an executable program corresponding to the triple-click event according to mapping between the user event and the executable program in the memory, and display the program on the front touch-sensitive display.

In another possible implementation manner, the processor specifically includes:
a third processing unit, configured to: when the terminal device is unlocked, determine, after receiving two touch signals corresponding to touch actions continuously from the driver within a preset time period, a current user event as a double-click event; and
a fourth processing unit, configured to: run an executable program corresponding to the double-click event according to mapping between the user event and the executable program in the memory, and display the program on the front touch-sensitive display.

In a second possible implementation manner of the first aspect of the embodiments of the present invention, the controller includes:
a driver, configured to: drive the auxiliary touch device, generate a corresponding touch signal according to each touch action of the user that is received by the auxiliary touch device, determine a user event according to the type and number of the touch signals, generate a combined touch signal corresponding to the user event, and send the combined touch signal to a processor, where different touch actions correspond to different types of touch signals; and the processor, configured to: receive the combined touch signal sent by the driver, run a corresponding executable program according to mapping between the combined touch signal and the executable program in the memory, and display the program on the front touch-sensitive display.

Further, in another possible implementation manner, the processor specifically includes:
a fifth processing unit, configured to receive a combined touch signal indicative of a triple-click event from the driver when the terminal device is locked; and
a sixth processing unit, configured to: run an executable program corresponding to the triple-click event according to mapping between the combined touch signal and the executable program in the memory, and display the program on the front touch-sensitive display.

In another possible implementation manner, the processor specifically includes:
a seventh processing unit, configured to receive a combined touch signal indicative of a double-click event from the driver when the terminal device is unlocked; and
an eighth processing unit, configured to: run an executable program corresponding to the double-click event according to mapping between the combined touch signal and the executable program in the memory, and display the program on the front touch-sensitive display.

A second aspect of the embodiments of the present invention provides a method for quickly starting a program on a terminal device, including:
detecting a touch action of a user that is received by an auxiliary touch device of a terminal device; generating a corresponding touch signal according to the touch action of the user that is received by the auxiliary touch device, and determining a user event according to the touch signal; and running a corresponding executable program according to a stored mapping between the user event and the executable program, and displaying the program on a front touch-sensitive display of the terminal device, where the auxiliary touch device is located on a back surface or a side surface of a device body of the terminal device, and the front touch-sensitive display is located on a front surface of the device body of the terminal device.

In a possible implementation manner of the second aspect of the embodiments of the present invention, the executable program includes but is not limited to a photographing program, a browser program, or a telephony program.

According to the terminal device and the method for quickly starting a program that are provided in the embodiments of the present invention, a controller drives an auxiliary touch device and determines a user event according to a touch action on the auxiliary touch device, and runs a corresponding executable program according to mapping between the user event and the executable program in a memory, thereby implementing quick start of the executable program corresponding to the touch action. Therefore, the operation steps are simple and practical, and the operation efficiency of a user on the terminal device is improved.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic side view of a terminal device according to an embodiment of the present invention;
FIG. 2 is a schematic structural diagram of a device body of a terminal device according to an embodiment of the present invention;
FIG. 3 is a schematic structural diagram of a device body of a terminal device according to another embodiment of the present invention;
FIG. 4 is a schematic structural diagram of a device body of a terminal device according to still another embodiment of the present invention;
FIG. 5 is a schematic structural diagram of a device body of a terminal device according to yet another embodiment of the present invention;
FIG. 6 is a schematic structural diagram of a device body of a terminal device according to yet another embodiment of the present invention;
FIG. 7 is a flowchart of a method for quickly starting a program on a terminal device according to an embodiment of the present invention;
FIG. 8 is a schematic flowchart of a method for quickly starting a program when a terminal device is locked according to an embodiment of the present invention; and
FIG. 9 is a schematic flowchart of a method for quickly starting a program when a terminal device is unlocked according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Terminal devices involved in the embodiments of the present invention include, but are not limited to, mobile phones, personal digital assistants (Personal Digital Assistant, abbreviated as PDA), wireless handheld devices, wireless notebooks, portable computers, MP3 players, MP4 players, and the like.

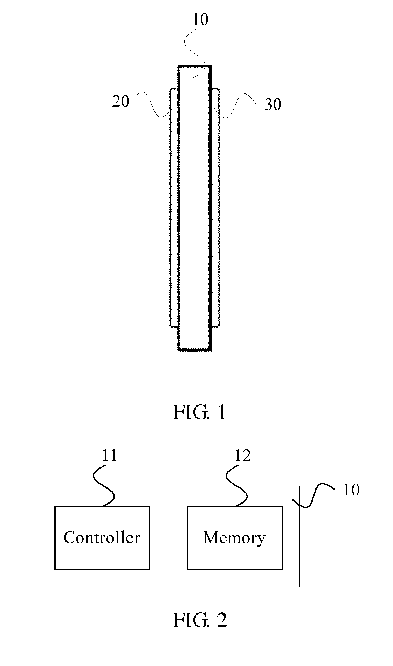

FIG. 1 is a schematic side view of a terminal device according to an embodiment of the present invention. As shown in FIG. 1, the terminal device in this embodiment may include a device body 10, where a front touch-sensitive display 20 is arranged on a front surface of the device body 10, and an auxiliary touch device 30 is located on a back surface or a side surface of the device body 10. Understandably, the auxiliary touch device 30 may be set in other unoccupied positions.

Specifically, the auxiliary touch device 30 may be a touch screen, a touchpad, or any other touch device.

FIG. 2 is a schematic structural diagram of a device body of a terminal device according to an embodiment of the present invention. As shown in FIG. 2, the device body 10 in the terminal device in this embodiment supports a controller 11 and a memory 12.

The controller 11 is configured to: drive the auxiliary touch device 30, generate a corresponding touch signal according to a touch action of a user that is received by the auxiliary touch device 30, determine a user event according to the touch signal, run a corresponding executable program according to mapping between the user event and the executable program in the memory 12, and display the program on the front touch-sensitive display 20.

The touch action on the auxiliary touch device 30 may be a click, a double click, a triple click, or other actions, for example, a slide and click on the auxiliary touch device 30, or operations on an original front touch screen together with operations on the auxiliary touch device 30. Similarly, the executable program started corresponding to the touch action on the auxiliary touch device 30 is not limited to applications, including applications of a camera, a telephone, a browser, a calendar, or any third-party application such as a photographing program, a video recording program, a browser program, a dial-up program, and a telephony program, or may also include functions of specific terminal devices, and the like. The contents operated on the auxiliary touch device are not limited to the contents displayed on the front touch-sensitive display, but may be any contents output by the terminal device to the user or specific functions of the terminal device. Similarly, such functions can be implemented in different operation directions such as landscape operations and portrait operations.

The user event may be a click event, a double-click event, a triple-click event, a slide event, or any event corresponding to a touch action or a touch action combination performed by any user for the auxiliary touch device at preset time.

The memory 12 is configured to store the mapping between the user event and the executable program.

The memory 12 stores mapping between a specific user event and a specific executable program. For example, a double-click event corresponds to quick start of a photographing program. Understandably, the user may set and modify the mapping in the memory 12 according to needs and preferences.

In this embodiment, a controller 11 drives an auxiliary touch device and determines a user event according to a touch action on the auxiliary touch device, and runs a corresponding executable program according to mapping between the user event and the executable program in a memory 12, thereby implementing quick start of the executable program corresponding to the touch action. Therefore, the operation steps are simple and practical, and the operation efficiency of a user on the terminal device is improved. Further, when a user operates the terminal device with a single hand, especially a large-screen mobile phone, operations performed by a thumb on a front touch screen of the terminal device are relatively inconvenient. The terminal device in the embodiment of the present invention takes full advantage of a back surface, a side surface and other unoccupied positions, and deploys an auxiliary touch device for controlling quick start of the program, so as to make operations more convenient and interesting and enhance user experience.

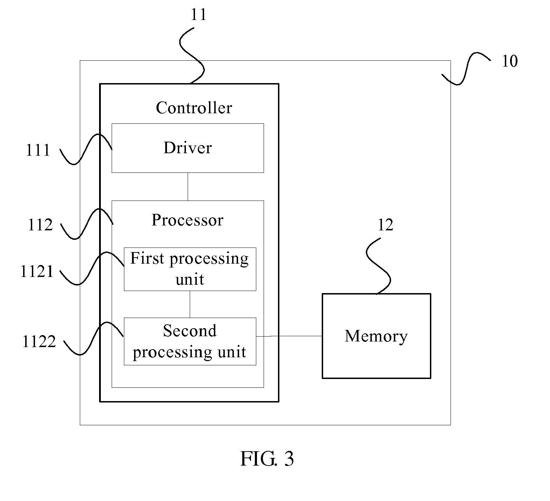

FIG. 3 is a schematic structural diagram of a device body of a terminal device according to another embodiment of the present invention. As shown in FIG. 3, the controller 11 in the device body 10 of the terminal device in this embodiment includes a driver 111 and a processor 112.

The driver 111 is configured to: drive the auxiliary touch device 30, generate a corresponding touch signal according to each touch action of the user that is received by the auxiliary touch device 30, and send the signals to the processor 112 successively, where different touch actions correspond to different types of touch signals.

For example, the driver 111 generates touch signals corresponding to two touch actions according to two continuous touch actions of the user that is received by the auxiliary touch device 30, and sends the signals to the processor 112 successively.

Understandably, as regards the setting of the auxiliary touch device on the terminal device and the implementation of corresponding functions in the embodiment of the present invention, the auxiliary touch device may be customized or added based on an existing terminal device. If the auxiliary touch device is added based on the existing terminal device, an entire event system of the terminal device and all other aspects related to the system involve many modifications and specific technical implementations. The following describes modifications of the corresponding modules in detail:

(1) Modification of the driver: To add an auxiliary touch device, a corresponding driver has to be added. The auxiliary touch device may be different from or totally the same as an original front touch screen in type (single-touch, multi-touch, size, and the like). The original front touch screen and the auxiliary touch device may share a driver, or have their respective drivers. The auxiliary touch device may be completely mapped onto the front touch-sensitive display, or partly mapped, for example, only the upper half part of the screen is mapped, or the auxiliary touch device is not mapped onto the screen at all, which may be customized according to needs. A driver equipped with a back touch-sensitive display generates a corresponding device node at /dev/input/XXX in the Linux kernel, which stores information such as device information and event information, so that the information is available for being invoked by an upper layer. The back touch-sensitive display must have its own device name different from the name of the front touch screen, so that the upper layer can distinguish a touch event of the original front touch screen from a touch event of the auxiliary touch device.

(2) Modification of a system server, for example, modification of an event module in an Android operating system: This part primarily reads an event of a device node, converts the event, and notifies an application distribution layer on the upper layer to pick up the event. This part is generally presented in a service state, and is initialized when the system is started. In the modification of this part, an event of the auxiliary touch device may be modified according to needs, for example, intercepted, converted, or modified into another corresponding event.

(3) Modification of the application distribution layer: The application distribution layer generally obtains an event from the server in a specific manner such as a pipeline and a shared memory mechanism of the Android system, and then distributes the event to each application. Because the application distribution layer is a part of an application layer, the modification of the application distribution layer can implement global event response, that is, an event that will be responded to by any display interface, and can determine a touch action on the auxiliary touch device, intercept an event, and the like. Because all events pass through this layer, the corresponding modification is very convenient.

(4) Modification of the application layer: This layer is specific to an application. A specific application may respond to an event of the auxiliary touch device and perform the corresponding display or change, which may be customized according to needs. For example, the application can respond to various slide events or click events on the upper layer.

The processor 112 is configured to: receive the touch signal sent by the driver 111, determine a user event according to the type and number of received touch signals, and run a corresponding executable program according to mapping between the user event and the executable program in the memory 12, and display the program on the front touch-sensitive display.

For example, if the processor 112 receives touch signals corresponding to two touch actions from the driver, the processor determines the user event as double-click event, runs a photographing program according to mapping between the double-click event and the photographing program in the memory 12, and implements quick start of the program.

Further, the processor 112 includes a first processing unit 1121 and a second processing unit 1122.

The first processing unit 1121 is configured to: when the terminal device is locked, determine, after receiving three touch signals corresponding to touch actions continuously from the driver within a preset time period, when the terminal device is locked.

The second processing unit 1122 is configured to: run an executable program corresponding to the triple-click event according to mapping between the user event and the executable program in the memory 12, and display the program on the front touch-sensitive display 20.

In this embodiment, when the terminal device is locked, if the first processing unit 1121 in the processor 112 determines a current user event as a triple-click event, the second processing unit 1122 runs an executable program corresponding to the triple-click event according to mapping between the user event and the executable program in the memory 12, thereby implementing quick start of the executable program corresponding to the triple-click event. Therefore, the operation steps are simple and practical, and the operation efficiency of a user on the terminal device is improved.

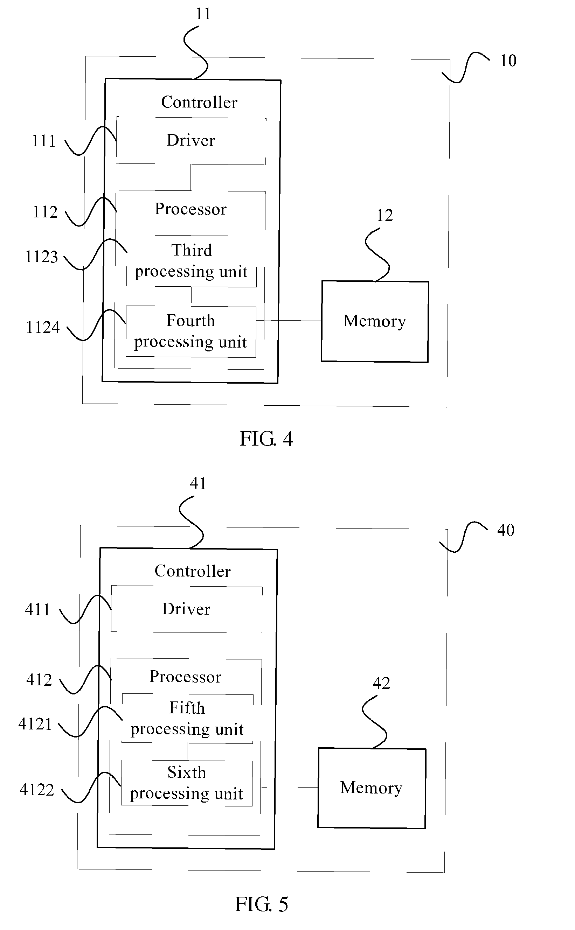

FIG. 4 is a schematic structural diagram of a device body of a terminal device according to still another embodiment of the present invention. As shown in FIG. 4, the terminal device in this embodiment is different from the terminal device in the embodiment corresponding to FIG. 3 in that, the processor 112 in the device body 10 of the terminal device in this embodiment includes a third processing unit 1123 and a fourth processing unit 1124.

The third processing unit 1123 is configured to: when the terminal device is unlocked, determine, after receiving two touch signals corresponding to touch actions continuously from the driver within a preset time period, a current user event as a double-click event.

The fourth processing unit 1124 is configured to: run an executable program corresponding to the double-click event according to mapping between the user event and the executable program in the memory, and display the program on the front touch-sensitive display 20.

In this embodiment, when the terminal device is unlocked, the third processing unit 1123 determines a current user event as a double-click event, and the fourth processing unit 1124 runs an executable program corresponding to the double-click event according to mapping between the user event and the executable program in the memory, thereby implementing quick start of the executable program corresponding to the double-click event. Therefore, the operation steps are simple and practical, and the operation efficiency of a user on the terminal device is improved.

FIG. 5 is a schematic structural diagram of a device body of a terminal device according to yet another embodiment of the present invention. As shown in FIG. 5, the device body 40 in the terminal device in this embodiment supports a controller 41 and a memory 42. The controller 41 includes a driver 411 and a processor 412.

The driver 411 in this embodiment is different from the drivers 111 in the embodiments corresponding to FIG. 3 and FIG. 4 in that, the driver 411 is configured to: drive the auxiliary touch device, generate a corresponding touch signal according to each touch action of the user that is received by the auxiliary touch device, determine a user event according to the type and number of the touch signals, generate a combined touch signal corresponding to the user event, and send the combined touch signal to the processor 412, where different touch actions correspond to different types of touch signals.

Specifically, in this embodiment, the driver 411 determines the user event according to the type and number of touch signals, generates the combined touch signal corresponding to the user event, and sends the combined touch signal to the processor 412.

The processor 412 is configured to: receive the combined touch signal sent by the driver, run a corresponding executable program according to mapping between the combined touch signal and the executable program in the memory 42, and display the program on the front touch-sensitive display 20.

Further, the processor 412 includes a fifth processing unit 4121 and a sixth processing unit 4122.

The fifth processing unit 4121 is configured to receive a combined touch signal indicative of a triple-click event from the driver when the terminal device is locked.

The sixth processing unit 4122 is configured to: run an executable program corresponding to the triple-click event according to mapping between the combined touch signal and the executable program in the memory 42, and display the program on the front touch-sensitive display.

In this embodiment, when the terminal device is locked, the fifth processing unit 4121 receives a combined touch signal indicative of a triple-click event from the driver, and the sixth processing unit 4122 runs an executable program corresponding to the triple-click event according to mapping between the combined touch signal and the executable program in the memory 42, thereby implementing quick start of the executable program corresponding to the triple-click event. Therefore, the operation steps are simple and practical, and the operation efficiency of a user on the terminal device is improved.

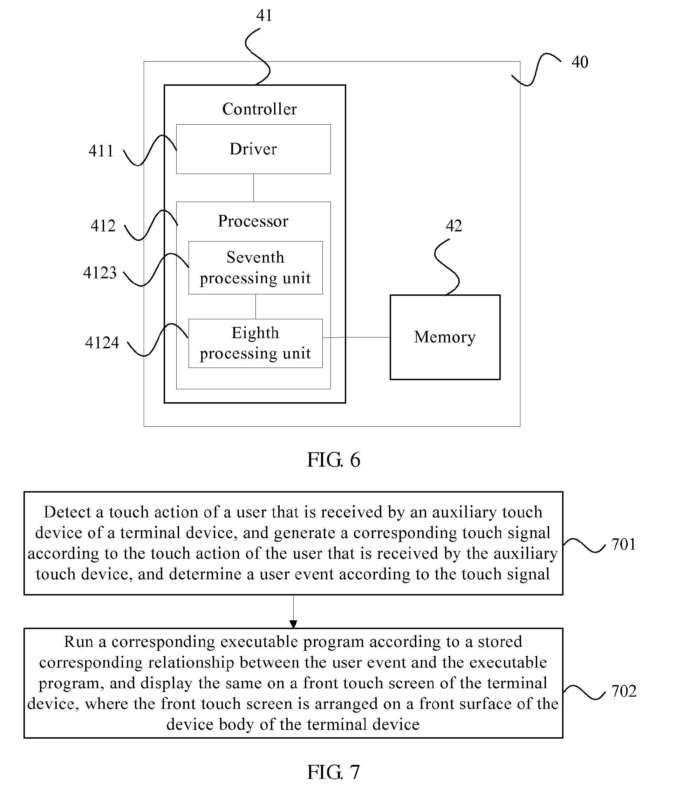

FIG. 6 is a schematic structural diagram of a device body of a terminal device according to yet another embodiment of the present invention. As shown in FIG. 6, the terminal device in this embodiment is different from the terminal device in the embodiment corresponding to FIG. 5 in that, the processor 412 in the device body 40 of the terminal device in this embodiment includes a seventh processing unit 4123 and an eighth processing unit 4124.

The seventh processing unit 4123 is configured to receive a combined touch signal indicative of a double-click event from the driver when the terminal device is unlocked.

The eighth processing unit 4124 is configured to: run an executable program corresponding to the double-click event according to mapping between the combined touch signal and the executable program in the memory, and display the program on the front touch-sensitive display 20.

In this embodiment, when the terminal device is unlocked, the seventh processing unit 4123 receives a combined touch signal indicative of a double-click event from the driver, and the eighth processing unit 4124 runs an executable program corresponding to the double-click event according to mapping between the combined touch signal and the executable program in the memory 42, thereby implementing quick start of the executable program corresponding to the double-click event. Therefore, the operation steps are simple and practical, and the operation efficiency of a user on the terminal device is improved.

Optionally, multiple auxiliary touch devices 30 are set in the terminal device.

An embodiment of the present invention provides a method for quickly starting a program on a terminal device. FIG. 7 is a flowchart of a method for quickly starting a program on a terminal device according to an embodiment of the present invention. As shown in FIG. 7, the method includes:

Step 701: Detect a touch action of a user that is received by an auxiliary touch device of a terminal device, and generate a corresponding touch signal according to the touch action of the user that is received by the auxiliary touch device, and determine a user event according to the touch signal, where the auxiliary touch device is located on a back surface or a side surface of the device body of the terminal device.

Step 702: Run a corresponding executable program according to a stored mapping between the user event and the executable program, and display the program on a front touch-sensitive display of the terminal device, where the front touch-sensitive display is located on a front surface of the device body of the terminal device.

In an embodiment, the mapping between the user event and the executable program may be stored in a memory of the terminal device, or stored on an external extension card of the terminal device, which is not particularly limited herein.

All terminal devices provided in the embodiments of the present invention are applicable to implementation of the method for quickly starting a program on a terminal device.

In this embodiment, a controller detects a touch action of a user that is received by an auxiliary touch device, determines a user event, and runs a corresponding executable program according to mapping between the user event and the executable program in a memory, thereby implementing quick start of the executable program corresponding to the user event. Therefore, the operation steps are simple and practical, and the operation efficiency of a user on the terminal device is improved.

Optionally, the executable program includes but is not limited to a photographing program, a video recording program, a browser program, or a telephony program. For example, by triple-clicking or double-clicking the auxiliary touch device on the terminal device in the embodiment of the present invention, the user can start a photographing program instantly to capture a scene that needs instant photographing.

To make the technical solutions of the embodiments of the present invention clearer and more understandable, the following describes the embodiments of the present invention in detail with reference to the terminal device and the method for quickly starting a program on a terminal device.

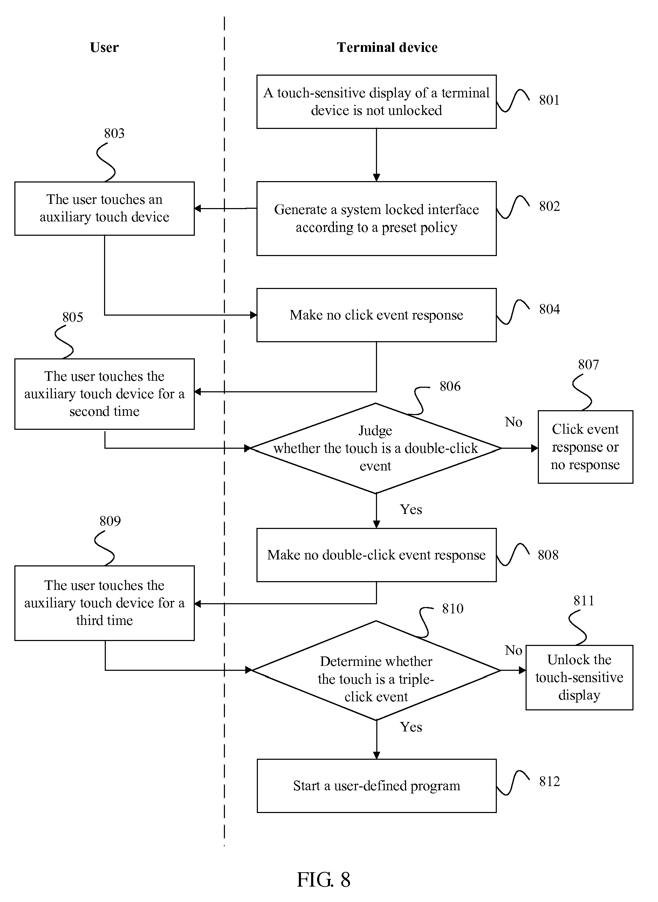

FIG. 8 is a schematic flowchart of a method for quickly starting a program when a terminal device is locked according to an embodiment of the present invention. As shown in FIG. 8, the method for quickly starting a program when a terminal device is locked according to the embodiment of the present invention includes:

Step 801: A touch-sensitive display of a terminal device is locked.

Step 802: Generate a system locked interface according to a preset policy.

Any form of a graphic area of a lock screen interface may be generated according to a preset policy regardless of the form, shape, and position on the touch screen. Relevant unlock prompt information may further appear in the graphic area in any form such as text, image, video, animation or a combination thereof.

Step 803: A user touches an auxiliary touch device.

The user touching a touch screen refers to a process that begins when a touch object contacts the touch screen, and that ends when all touch objects leave the touch screen. The touch object may be any object suitable for operating a touch screen, such as a finger or stylus tip.

Step 804: Make no click event response.

Information about the touch event, including a position, an event, touch pressure, and the like is obtained; the event is retained for subsequent double-click determining; and a click action is determined as a click event if duration from a previous click action to this click action exceeds a time interval between two click actions of a double-click event. The click event may be responded to or not.

Step 805: The user touches the auxiliary touch device for a second time.

Step 806: Determine whether the touch is a double-click event. The specific determining method is to compare the event with a first touch event, including comparison of time and position information, and the like.

Step 807: If the touch is not a double-click event, make no response; or determine the touch as a click event and make a click response.

Step 808: If the touch is a double-click event, also retain the event and make no double-click event response.

Step 809: The user touches the auxiliary touch device for a third time.

Step 810: Determine whether the touch is a triple-click event. The specific determining method is to compare the event with the two previous events, including comparison of time and position information, and the like.

Step 811: If the touch is not a triple-click event, determine the touch as a double-click event, and perform an operation of unlocking the touch-sensitive display.

Step 812: If the touch is a triple-click event, start a user-defined program, which may be applications of a camera, a telephone, a browser, a calendar, or any third-party application, or may also include functions of a specific terminal device, and the like.

In this embodiment, a terminal device determines a touch action on an auxiliary touch screen and makes a response. Therefore, when a touch-sensitive display of the terminal device is locked, an unlock operation can be performed by double clicking an auxiliary touch device; and a user-defined program can be started by triple clicking the auxiliary touch device. The operation steps are simple and practical, and the operation efficiency of a user on the terminal device can be improved.

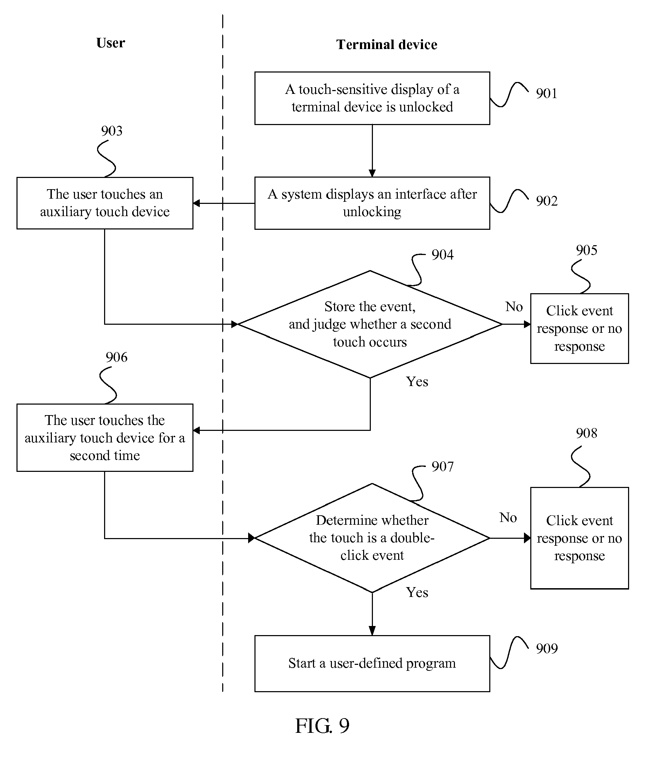

FIG. 9 is a schematic flowchart of a method for quickly starting a program when a terminal device is unlocked according to an embodiment of the present invention. As shown in FIG. 9, the method for quickly starting a program when a terminal device is unlocked according to the embodiment of the present invention includes:

Step 901: A touch-sensitive display of a terminal device is unlocked.

Step 902: A system displays an interface after unlocking, which may include a homepage interface, an interface of any application, and the like.

Step 903: A user touches an auxiliary touch device.

The user touching a touch screen refers to a process that begins when a touch object contacts the touch screen, and that ends when all touch objects leave the touch screen. The touch object may be any object suitable for operating a touch screen, such as a finger or stylus tip.

Step 904: Store an event, and determine whether a second touch occurs; and specifically, store touch event information such as a position, an event, and touch pressure, make no click response, and determine whether a second touch event occurs within a time interval between two click actions of a double-click event.

Step 905: If no second touch event occurs, make a click response or make no response according to information about a first touch event, including time, a click position, and the like.

Step 906: If a second touch event occurs, make no click response described in the previous step. The user touches the auxiliary touch device for a second time.

Step 907: Determine whether the touch is a double-click event. The specific determining method is to compare the event with a previous event, including comparison of time and position information, and the like.

Step 908: If the touch is not a double-click event, determine the touch as a click event, and make a click response or make no response.

Step 909: If the touch is a double-click event, start a user-defined program, which may be applications of a camera, a telephone, a browser, a calendar, or any third-party application, or may also include functions of a specific terminal device, and the like.

In this embodiment, a terminal device determines a touch action on an auxiliary touch screen and makes a response. Therefore, when a touch-sensitive display of the terminal device is unlocked, a user-defined program can be started by double clicking an auxiliary touch device; and a user-defined program can be started by triple clicking the auxiliary touch device. The operation steps are simple and practical, and the operation efficiency of a user on the terminal device is improved.

The terminal device and the method for implementing quick start of a program thereof that are provided in the embodiments of the present invention can improve operability of the terminal device, make operations more convenient and interesting, and enhance user experience.

Persons of ordinary skill in the art may understand that, all or a part of the steps of the foregoing method embodiments may be implemented by a program instructing relevant hardware. The aforementioned program may be stored in a computer readable storage medium. When the program runs, the steps of the forgoing method embodiments are performed. The foregoing storage medium includes any medium capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that, they may still make modifications to the technical solutions described in the foregoing embodiments, or make equivalent replacements to some or all the technical features thereof, as long as these modifications or replacements do not make the essence of corresponding technical solutions depart from the spirit and scope of the technical solutions of the embodiments of the present invention.

## Claims

1. A terminal device, comprising a device body, wherein a front touch-sensitive display is located on a front surface of the device body, and an auxiliary touch device is located on a back surface or a side surface of the device body; and
the device body supports a controller and a memory, wherein
the controller is configured to: drive the auxiliary touch device, generate a corresponding touch signal according to a touch action of a user that is received by the auxiliary touch device, determine a user event according to the touch signal, run a corresponding executable program according to mapping between the user event and the executable program in the memory, and display the program on the front touch-sensitive display; and
the memory is configured to store the mapping between the user event and the executable program.

2. The terminal device according to claim 1, wherein the controller comprises:
a driver, configured to: drive the auxiliary touch device, generate a corresponding touch signal according to each touch action of the user that is received by the auxiliary touch device, and send the signals to a processor successively, wherein different touch actions correspond to different types of touch signals; and
the processor, configured to: receive the touch signal sent by the driver, determine a user event according to the type and number of received touch signals, run a corresponding executable program according to mapping between the user event and the executable program in the memory, and display the program on the front touch-sensitive display.

3. The terminal device according to claim 2, wherein the processor comprises:
a first processing unit, configured to: when the terminal device is locked, determine, after receiving three touch signals corresponding to touch actions continuously from the driver within a preset time period, when the terminal device is locked; and
a second processing unit, configured to: run an executable program corresponding to the triple-click event according to mapping between the user event and the executable program in the memory, and display the program on the front touch-sensitive display.

4. The terminal device according to claim 2, wherein the processor comprises:
a third processing unit, configured to: when the terminal device is unlocked, determine, after receiving two touch signals corresponding to touch actions continuously from the driver within a preset time period, a current user event as a double-click event; and
a fourth processing unit, configured to: run an executable program corresponding to the double-click event according to mapping between the user event and the executable program in the memory, and display the program on the front touch-sensitive display.

5. The terminal device according to claim 1, wherein the controller comprises:
a driver, configured to: drive the auxiliary touch device, generate a corresponding touch signal according to each touch action of the user that is received by the auxiliary touch device, determine a user event according to the type and number of the touch signals, generate a combined touch signal corresponding to the user event, and send the combined touch signal to a processor, wherein different touch actions correspond to different types of touch signals; and
the processor, configured to: receive the combined touch signal sent by the driver, run a corresponding executable program according to mapping between the combined touch signal and the executable program in the memory, and display the program on the front touch-sensitive display.

6. The terminal device according to claim 5, wherein the processor comprises:
a fifth processing unit, configured to receive a combined touch signal indicative of a triple-click event from the driver when the terminal device is locked; and
a sixth processing unit, configured to: run an executable program corresponding to the triple-click event according to mapping between the combined touch signal and the executable program in the memory, and display the program on the front touch-sensitive display.

7. The terminal device according to claim 5, wherein the processor comprises:
a seventh processing unit, configured to receive a combined touch signal indicative of a double-click event from the driver when the terminal device is unlocked; and
an eighth processing unit, configured to: run an executable program corresponding to the double-click event according to mapping between the combined touch signal and the executable program in the memory, and display the program on the front touch-sensitive display.

8. The terminal device according to any one of claims 1 to 7, wherein multiple auxiliary touch devices are set.

9. The terminal device according to any one of claims 1 to 8, wherein the auxiliary touch device is a touch screen or a touchpad.

10. The device according to claim 9, wherein the executable program comprises a photographing program, a video recording program, a browser program, or a telephony program.

11. A method for quickly starting a program on a terminal device, comprising:
detecting a touch action of a user that is received by an auxiliary touch device of a terminal device, and generating a corresponding touch signal according to the touch action of the user that is received by the auxiliary touch device, wherein the auxiliary touch device is located on a back surface or a side surface of a device body of the terminal device;
determining a user event according to the touch signal; and
running a corresponding executable program according to a stored mapping between the user event and the executable program, and displaying the program on a front touch-sensitive display of the terminal device, wherein the front touch-sensitive display is located on a front surface of the device body of the terminal device.

12. The method according to claim 11, wherein the executable program comprises a photographing program, a video recording program, a browser program, or a telephony program.
